# EUROPEAN PATENT APPLICATION

(11) **EP 3 719 172 A1**
(43) Date of publication of application: **07.10.2020**
(21) Application number: 18882925.3
(22) Date of filing: 01.11.2018
(51) Int. Cl.: C25B 1/02, C25B 9/08, C02F 1/461, C01B 3/22, C02F 101/16

(54) **REACTOR THAT PRODUCES HYDROGEN BY REDUCTION OF HYDRONIUM IONS PRESENT IN THE CHEMICAL EQUILIBRIUM IN WATER AND BY OXIDATION OF THE ORGANIC MOLECULES FOUND IN EXCREMENT**

(30) Priority: 01.12.2017 CO 17012602
(71) Applicant: Lozada Castro, Juan Jose, Pasto, Nariño (CO)
(72) Inventor: Lozada Castro, Juan Jose, Pasto, Nariño (CO)
(74) Representative: Herrero & Asociados, S.L.
(86) International application number: PCT/IB2018/058596
(87) International publication number: WO 2019/106456

(57) **Abstract**

An electrochemical reactor designed to increase the efficiency of hydrogen production from faeces and urine (excrement) is disclosed. Said reactor comprises two half-cells separated in a selective manner, a membrane systems separating the half-cells (comprising a proton-exchange and an anion-exchange membranes) and a system of electrical bridges that allow two mutually perpendicular electrical fields to be formed, with the electrical field in the horizontal direction between the two half-cells being greater than the vertical electrical field generated within the anode. The half-cells have a configuration of two resistances in series, which allows the potential of each compartment to be controlled in an independent and complementary manner by adjusting the conductivity of the solutions in the half-cells. Said configuration allows the consumption of energy to form hydrogen to be significantly reduced in comparison with conventional electrolytic cells using water in an alkaline medium by combining the chemical processes of electrolysis (anode) and the law of chemical equilibrium (cathode). International patent classification: Electrolytic production of hydrogen or oxygen (C25B1/04) - Production of hydrogen or gaseous mixtures containing hydrogen by decomposition of gaseous or liquid organic compounds (C01B3/22) Technological sector: Chemical processes.

## Description

### Field of the Invention

The present invention belongs to the electrochemistry field and consists of a reactor whose configuration allows to increase the energy efficiency of hydrogen production from the oxidation of the organic molecules present in the faeces, applying electrolysis. Although hydrogen turns out to be the ideal fuel from an environmental point of view (water is the only reaction product), the known mechanisms for obtaining it from water, fossil fuels or organic matter are not clean and/or efficient. Electrolytic reactors form a relevant research field to develop clean and efficient hydrogen production systems.

### Background of the Invention

The use of fossil fuels as a mechanism to meet the majority of energy demand in the world (around 87%), is the main source of greenhouse gas emissions (carbon dioxide), responsible for the global warming effect that the planet suffers. Additionally, the reserves of these types of fuels (coal, oil and gas) are not unlimited, which is why it is neither possible nor appropriate to continue depending on them as a source of energy.

Due to the above, the world market of the so-called renewable energies is growing in a sustained and robust way; the foregoing, despite the fact that such renewable energies are still in research phases so that they are economically viable, as well as although they are not always completely clean because fossil fuels are sometimes required to obtain them.

In particular, the use of hydrogen as a source of energy and its transformation into electricity has been acquiring great importance in recent years. In fact, the percentage of hydrogen used in so-called fuel cells or simply as a direct substitute for gasoline is increasingly high to achieve the operation of internal combustion engines (currently, the vast majority of hydrogen obtained in the industry is used for the synthesis of ammonia or for the oil cracking).

However, the main drawback that the use of hydrogen currently has is its production, because although there are several ways to obtain it, the most commonly used today are not considered clean technologies, namely: Using natural gas through a steam reforming process, by reforming coal to produce hydrogen through a gasification process, from gasoline or gasified biomass, among others. Thus, for example, more than half of all the hydrogen produced in the world is obtained from the natural gas reforming, which is a scarce and expensive fossil fuel, and in its process releases carbon dioxide.

The hydrogen can also be obtained from water; either through its biological production with an algae bioreactor, using heat (thermolysis), by chemical methods (chemical reduction), using electricity (water electrolysis), among others.

In particular relationship with the water electrolysis; although, this corresponds to a clean technology for obtaining hydrogen (as long as the electricity used does not come from fossil fuels); it is not a widely used method mainly because its efficiency (thermodynamic and economic) is not very competitive in relation to, for example, natural gas reforming.

Faced with this situation, in recent years, different efforts have been made to develop mechanisms aimed to obtain hydrogen from the electrolysis of organic matter, whose oxidation potential is generally lower than of water.

Thus, for example, patent document EP1892215 (June 2, 2006) discloses a device for the electrochemical generation of hydrogen from the oxidation of selected organic compounds among alcohols (methanol, ethanol, ethylene glycol, 2-propanol), aldehydes (formaldehyde), carboxylic acids (formic acid) and ethers (diethyl ether), and using low reaction temperatures (100°C or less).

Said hydrogen generating device is characterized in that it comprises a partition membrane, a fuel electrode located on one of the surfaces of the partition membrane, a means for supplying a fuel containing the organic compound and water to the fuel electrode, an oxidizing electrode provided on the other surface of the partition membrane, a means for supplying an oxidizing agent to the oxidizing electrode, and a means for generating and collecting hydrogen-containing gas from the fuel electrode.

Using methanol as an example, the applicants of EP1892215 argue that the redox chemical reaction presented can be expressed by the following formula:

2CH₃OH + 2H₂O + 3/2O₂ → 2CO₂ + 3H₂O + 3H₂

Where said reaction would have a theoretical efficiency of 59%.

Finally, the applicants of EP1892215 point out that, using the hydrogen generating device disclosed therein, hydrogen can easily be supplied to a hydrogen storage tank to supply hydrogen to a hydrogen storage container incorporated in an electric car (fuel cell car). In addition, when hydrogen is used as a processing gas or the like in the manufacture of semiconductor devices, hydrogen can easily be supplied to a processing site by providing a hydrogen storage medium.

For its part, in US2008/0277273 patent (June 25, 2008) a system for producing hydrogen gas from biodegradable organic matter and using bacteria as biocatalysts is disclosed.

In particular, said patent discloses an electrochemical system for the generation of hydrogen gas that preferably uses wastewater, and wherein the reactor basically consists of a housing consisting of a single chamber in which the cathode and the anode are arranged without any membrane or ion exchange separator be arranged between them.

In operation, the housing is partially filled with an aqueous medium substantially free of oxygen but containing a plurality of exoelectrogenic bacteria that are responsible to oxidize the biodegradable organic fuel that is present in the interior space of the housing. In addition, and optionally, said aqueous medium includes a chemical mediator for the transfer to the anode of electrons generated by the plurality of bacteria.

According to the experimental tests revealed by the applicants of patent document US2008/0277273, using a voltage of 0.5 V, the reactor produced a total of 31.88 mL of gas, and of this 30.76 mL was hydrogen gas, which represented a purity of 96.5%. For its part, the process efficiency, evaluated in terms of the combustion heat of the hydrogen gas produced compared to the electricity used (both based on joules) was 334%. The Coulombic Efficiency (CE) of the process, defined as the percentage of electrons recovered from the substrate was 94%, while according to the energy content of the substrate degraded during a test (92%) and the heat of combustion of the hydrogen gas produced, the overall energy efficiency of the process was 93%. Finally, the current density produced in the system is 147 A/m3, while the rate of hydrogen gas production normalized to the reactor liquid volume was 1640 liters of hydrogen gas per cubic meter of reactor per day.

On the other hand, in recent years, particular studies have been carried out to obtain hydrogen from the electrolysis of urea present in the urine. Among these is the research published in the scientific article Boggs, Bryan K, et al;, Urea electrolysis: direct hydrogen production from urine; Chemical communications, 2009, No. 32, where an electrochemical process is disclosed that involves the electrolysis of urea in an alkaline medium (KOH) for the production of H₂. The authors showed that it is possible to electrochemically oxidize urea (at an average concentration of 0.33 M) using electrodes made of low-cost transition metals, such as nickel.

Likewise, in the scientific article King, Rebecca L., et al;, Investigation of multimetal catalysts far stable hydrogen production via urea electrolysis; Journal of power sources, 2011, Vol. 196, N° 22, it was shown that urea electrolysis is a viable method for the remediation of wastewater and the simultaneous production of hydrogen, noting that although a low-cost nickel catalyst results optimal for the oxidation of urea in alkaline medium, it was necessary to find mechanisms to reduce surface obstruction and increase low current density. In this sense and according to the experimental results revealed by the authors, a RhNi multimetal electrode allows to reduce the overpotential for urea electrooxidation, as well as an improvement in current density by a factor of 200 compared to a Ni catalyst.

Finally, in the patent document MX 2011/013384 (December 13, 2011) an electrochemical cell of hydrogen and oxygen generation from urine and/or sweat is disclosed, which comprises a filter to control the amount of ammonia in urine (where said filter comprises fibers, sponge, cotton, sand and activated carbon) and a core formed by an arrangement of stainless steel and/or nickel plates (being possible to use other transition metals) and a layer that stops the created foam through the urine but allowing the passage of hydrogen and oxygen generated towards the bubbler.

In addition to said cell, a system adjacent to it is disclosed for the supply/recirculation of urine and/or sweat, which comprises a secondary filter that is responsible for retaining the urine residues that are formed when carried out the electrolysis in the cell.

According to the applicant of said patent MX 2011/013384, the key aspects of the system developed are the inclusion of the ammonia control filter in the urine and the filter for the waste that the electrolysis of urine and/or sweat produces in the core of the cell, since these allow to considerably extend the maintenance period of the unit.

In accordance with all of the above, it is clear that different studies are known in the state of the art in which urine is used as a source of hydrogen production by electrolysis processes, which, however, present a series of related complications mainly with the small amount of organic matter present in the urine, the induction of undesirable secondary reactions that generate abundant foam, sludges and other pollutant gases, and the need for a complex process of previous urine filtration.

Given the above and taking into account the great relevance of hydrogen as part of the future energy in the world, it is clear that in the state of the art there was a need to develop an electrochemical system optimized for obtaining high purity hydrogen without the need for comprehensive pretreatments from organic molecules present in the faeces.

### General description of the invention

In response to the technical problem described above, in the present patent application is revealed an electrochemical reactor that produces hydrogen from two reactions that are carried out separately: An oxidation reaction of organic molecules presents in the faeces; and a reduction reaction of hydronium ions (H₃Q⁺) present in the chemical equilibrium of water.

Said reactor comprises two half-cells that are separated in a selectively by a membrane and electrical bridges systems that allows the formation of two mutually perpendicular electrical fields, where the electrical field in the horizontal direction between the two half-cells is greater than the vertical electrical field generated within the anode with a ratio between them of (4:1).

Taking the urea present in the urine as a model organic molecule, the oxidation reaction generates hydronium ions on the anodic plates, which are attracted by the electrical bridge located at the bottom of the anode, and in turn are attracted by the electrical bridge between the two half-cells and cathodic plates, achieving a transfer of hydronium ions and water molecules through the membrane systems, and thus establish an experimental balance of charge and matter.

After this, while the hydronium ions that have been transferred are reduced on the cathodic plates to form hydrogen, on behalf of Le Chatelier's principle, the chemical equilibrium shifts to the right side, producing hydroxyl ions that, to compensate for the loss of Hydronium ions, are transported by migration from the cathode to the anode through the membrane systems, which the kinetics of the urea oxidation reaction in basic medium.

The reactor disclosed here allows to reduce the energy consumption to form hydrogen in a significant way compared to the electrolytic cells that use water in alkaline medium, the above because the organic molecules have a lower oxidation potential than that of water and because the proposed cathodic reaction uses the chemical equilibrium of water, so that once hydrogen has formed on the cathode, hydroxyl ions spontaneously form and the previously consumed hydronium ions are compensated.

Likewise, the configuration of the electrochemical reactor revealed here allows to produce high purity hydrogen without the need for comprehensive pretreatments of the raw material to be oxidized (organic molecules present in the faeces), and achieving stable levels of hydrogen production until the depletion of said raw material inside the reaction cell.

### Description of the Figures

**FIGURE 1** is a complete diagram of the reactor, which includes: (1.1) The two half-cells (anodic half-cell on the left, cathodic half-cell on the right) and, (1.2) the membrane systems;
**FIGURE 2** is a diagram of the anodic half-cell in particular, showing the arrangement of the different anodic plates that are part of the system configuration;
**FIGURE 3** is a diagram of the cathodic half-cell in particular, showing the arrangement of the different cathodic plates that are part of the system configuration;
**FIGURE 4** is a general representation of the electrical fields that affect the system, one with horizontal orientation (E1) and other one with vertical orientation (E2).
**FIGURE 5** shows the movements of the negative and positive charges through the membrane systems, according to the electrical fields.

### Detailed description of the Invention

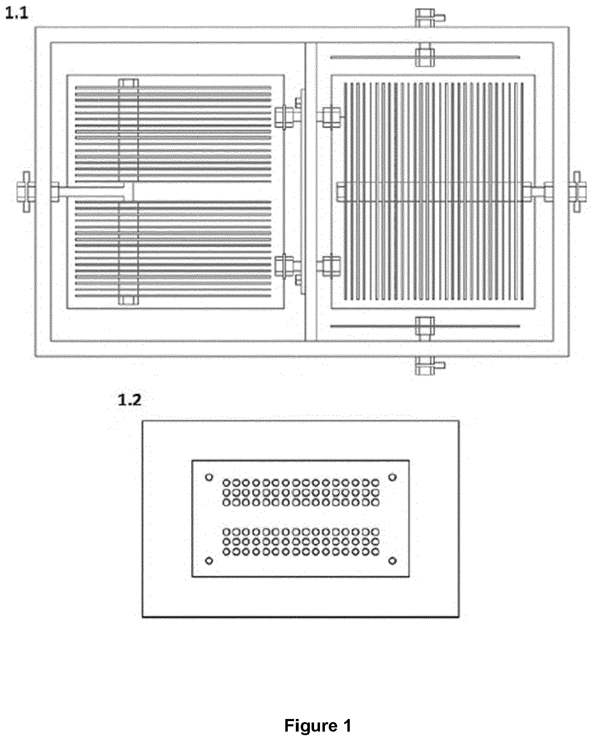

In addition to previously stated, the object of the present application can be appreciated in detail by the subsequent description of the reactor developed:
In accordance with Figure 1, the reactor disclosed herein consists of an electrolytic cell that has the anode and cathode separated and materially connected in a selective manner so that some of the species formed in the oxidation process at the anode (hydronium ions) they can be transferred through a membrane systems (1.2) and react in the cathode, while hydroxyl ions formed in the cathode as a result of chemical equilibrium of water, are transported by migration to the anode and thus establish a balance of matter and charge.

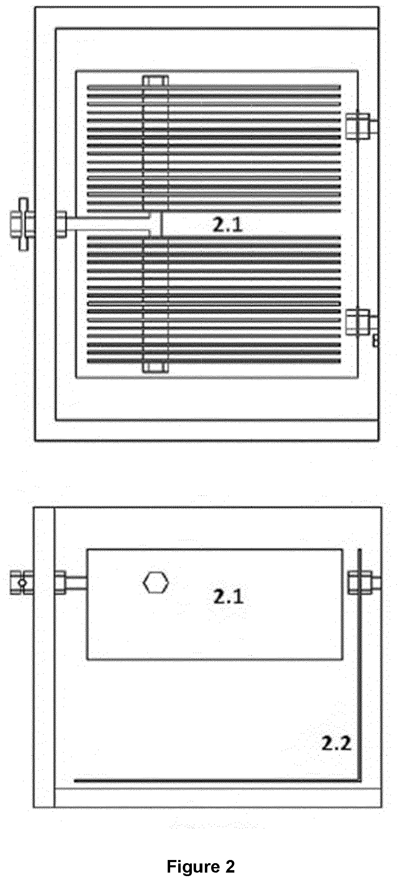

Specifically, and according to Figure 2, the anode is formed by 32 metal plates (2.1) located in the center of the half-cell, which come into contact with the surface that contains the membrane systems (1.2) to decrease the distance to the cathode plates. Said configuration allows the negative charge density to be given towards the upper region of the half-cell, and that the positive charges are centered towards the lower zone.

In a particular embodiment of the invention, the main metal plates (2.1) in the anode are 8, which can be manufactured in 316 L stainless steel and can have a rectangular shape of 6cm x 12 cm.

In another particular embodiment of the invention, the separation distance between the auxiliary plates and the anodic bridge (2.2) is 0.5 cm.

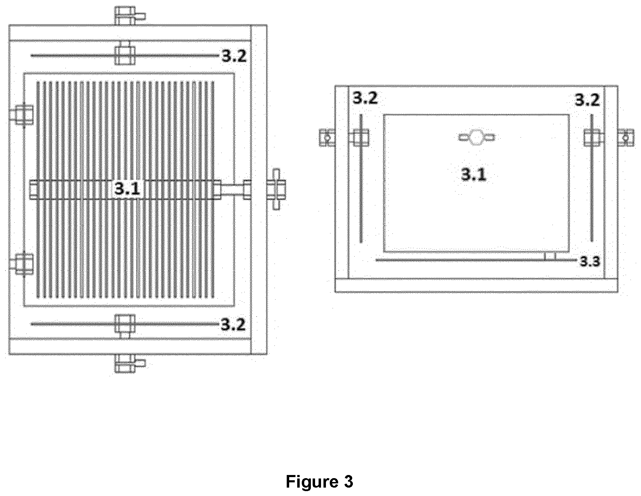

For its part and as seen in Figure 3, the cathode is composed by a metal bridge (3.3) located at the bottom of the half-cell, which is connected to the anodic bridge (2.2) by a stainless steel screw through of an L-shaped leg, and where the screw must be outside the fluid system.

In the reactor disclosed here, the cathode plates are divided into two groups: two auxiliary plates (3.2) that are located on the faces of the half-cell and 30 main plates (3.1) that are centered on the body of the half-cell. This configuration allows, for example, hydronium ions to pass from the anode to the cathode by migration and move from the bottom of the cathode to the top of the cathode, and from the cathode input to the bottom of the cathode.

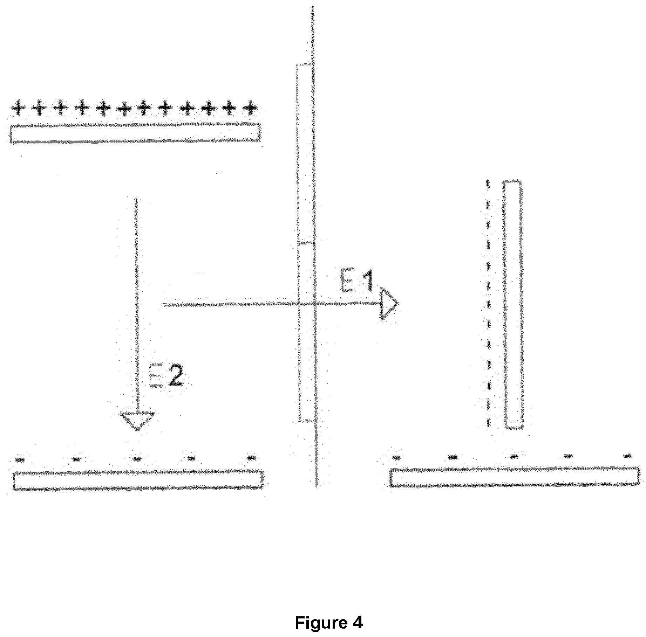

Now, in accordance with Figure 4, the system of electric bridges (2.2, 3.3) that are part of the reactor disclosed here are designed to form two electrical fields (E1 - E2) perpendicular to each other, the electrical field being directional horizontal between the two half-cells greater than the perpendicular electric field generated within the anode, with a ratio (4:1).

Additionally, it is pertinent to point out that, from the electrical point of view, the two half-cells (1.1) that make up the revealed reactor have a configuration of two resistors in series, with which it is possible to control the potential of each compartment independently and complementary to through the adjustment of the conductivity of the solutions in each of the half-cells.

In a particular embodiment of the invention, the appropriate potential values anode: cathode are 1V: 2,5V.

However, the reactor disclosed here is designed to produce hydrogen from electrolysis oxidation reactions of the organic molecules present in the faeces, which are given separately to the reduction reaction of the hydronium ions present and formed in the chemical equilibrium of water. For this purpose, in both compartments (cathodic and anodic) stainless steel plates are arranged that act as electrodes (2.1 and 3.1) and electric bridges (2.2 and 3.3).

The reactor conditions imply that homogenized faeces are in the anode, while in the cathode there is water and small amounts of a conductive electrolyte. For its part, the membrane systems (1.2) that separates the two half-cells (1.1) is composed of a proton exchange membrane of nafion combined with a generic membrane (stretch film, polymeric elastic membrane of linear, low density polyethylene with an approximate pore size of 30 A) or anion exchange.

In a particular embodiment of the invention, the conductive electrolyte present in the cathode is phosphoric acid (H₃PO₄).

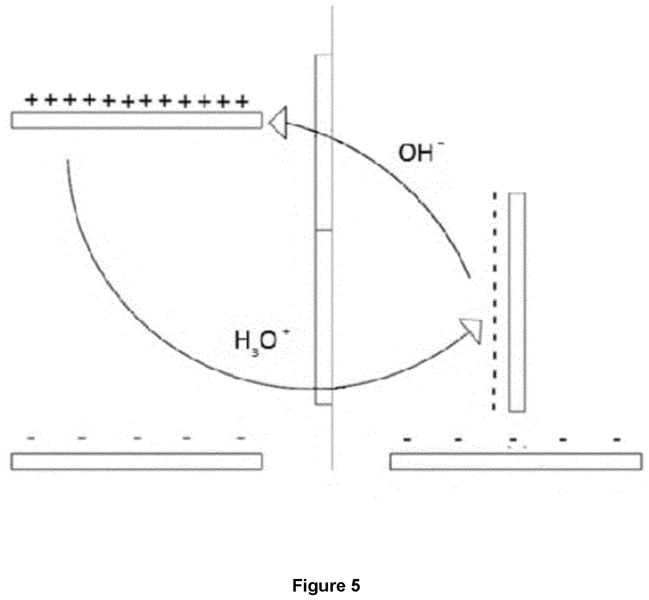

When using the urea present in the urine as a model organic molecule, its oxidation generates in the anode hydronium ions (see semi-reaction 1a), which, once formed, are attracted by the electric bridge located at the bottom of the anode (electric field E2) and in turn are attracted to the bridge and cathode plates E1 (Figures 4 and 5), causing the transfer of hydronium ions and water molecules through the nafion membrane. This transfer means that an experimental balance of load and matter is established in the system.

*Anode: CO(NH₂)₂(_{aq})* + *7H₂O* → *N₂(g)* + *6H₃Q⁺* + *CO*₂+ *6e*⁻ *(1a)*

*Cathode: 6H₃Q⁺* + *6e⁻* → *3H₂(g)* + *6H₂O* (1b)

*Total reaction: CO(NH₂)_{2(aq)}* + *H₂O* → *N₂(g)* + *3H₂(g)* + *CO₂(g)* (1)

Already in the cathode, the hydronium ions are reduced on the cathodic plates (semi-reaction 1b) forming gaseous hydrogen (H2), after which, and by the Le-Chatelier's principle, the chemical equilibrium shifts to the right side producing hydroxyl ions and compensating for the loss of hydronium ions.

Finally, part of the hydroxyl ions is transported by migration from the cathode to the anode through the generic membrane that is part of the membrane systems, facilitating the kinetics of the urea oxidation reaction in basic medium.

The reactor disclosed here allows to significantly reduce the energy consumption required to produce hydrogen from the oxidation process of the organic matter present in the faeces. In this way, the application of this technology allows to oxidize the organic matter present in the faeces, generating sludge and few amounts of gases (nitrogen and carbon dioxide), but allowing the use of energy to form gaseous hydrogen.

This process has different advantages, which include:
1. Reduce water pollution by harnessing the energy contained in faeces;
2. Reduce the pollution caused to the atmosphere by the gases of harmful effects produced by the combustion of the explosion engines that use hydrocarbons, promoting the use of hydrogen technology as fuel without changing the technology of the current explosion engines; and,
3. Reduce the cost to produce hydrogen since the raw material is faece and the energy applied is less than to other technologies.

The disclosed reactor uses electrical energy to carry out two chemical processes separately, so that the oxidation and reduction processes are carried out in a compartment separately selectively but not electrically isolated, while to compensate the current of the system, an electric bridge is used in stainless steel capable of increasing the production of hydrogen in the cathode.

The system of electrical bridges (2.2 and 3.3) that are part of the reactor disclosed here, may eventually be suspended because the membrane systems (1.2) is able to function at the same time as an electrical bridge, the above, although a decrease in the applied current (energy applied to a certain potential) as a result of an increase in the resistance of the system, with the consequent decrease in the amount of hydrogen generated (energy produced in the form of hydrogen).

However, when the system is connected to an external source, the central plates of the anode (2.1) are positively charged and the bridge of the lower part is negatively charged. On the other hand, the anode bridge (2.2) is connected to the cathode bridge (3.3), and although said plate is slightly negatively charged, the central plates of the cathode (3.1) are loaded more strongly since they are directly connected to the source and for this reason the hydronium ions move in the manner described in Figure 5.

It should be noted that for an electric current to present, charges must flow in both directions, which is why once the system consumes hydroniums in the cathode by chemical equilibrium it generates hydroxyl ions (increasing its density in said compartment), which by migration are transported to the anode where the auxiliary plates have been arranged in their lateral areas to improve the internal dynamics of the system since it increases the density of negative charges at these sites, while in the center and in the lower area there is a higher density of protons, thus facilitating the protonic flow.

The reactor disclosed here takes advantage of the energy contained in the oxidizable molecules of the faeces, and although external energy is still required to transport the charges across the membranes, the potential that must be applied to electrolyze the water molecules is -1,23 V, while to electrolyte urea molecules is -0,37 V. On the other hand, the chemical equilibrium reaction in the cathode is spontaneous (that is, requires 0,00 V), thus obtaining higher electrical efficiencies to 100%.

### Example

In order to show the operation and advantages of the reactor according to the present invention, a comparative example between a conventional cell and said novel reactor is presented below.

In this sense, while in conventional cells that use water the oxidation and reduction reactions are carried out in the same compartment (that's the reason why they normally generate a maximum of 66% H₂ and 34% O₂), when used the system disclosed in the present invention obtains percentages of hydrogen greater than 90%.

On the other hand, the energy consumption in the form of electric current is much higher when conventional systems are used because the potential that is required to electrolyze the water molecule is 3,32 times greater than to electrolyze an organic molecule such as urea. Now, although conventional cells can be used to electrolyte urine, the reactions are carried out in a single compartment presenting undesirable reactions such as foaming and nitrogen oxides formation, which decreases the percentage of hydrogen and increases energy consumption.

Contrary to the above, the processes presented in the reactor disclosed here allow to reduce energy consumption to form hydrogen in a significant way compared to conventional cells that use water in alkaline medium. Specifically, the initial calculations indicate that the energy consumption of the reactor of the present invention corresponds to 25% of the energy consumption of conventional cells, a decrease that is due to the fact that organic molecules such as urea have a low oxidation potential and that the cathodic reaction uses the chemical equilibrium of water, so that once hydrogen is formed and thanks to the Le Chatelier's principle, hydroxyl ions spontaneously form which compensate for the hydronium ions consumed.

Thus, using the reactor disclosed here, it has been possible to obtain up to 92% pure hydrogen with flows up to 40 L/h by applying an electrical energy equivalent to 14 V and 2 A of electric current.

## Claims

1. A hydrogen producing reactor **characterized in that** it comprises an electrolytic cell (1.1) that has the anode and cathode selectively separated but materially connected by a membrane system (1.2), and where the hydronium ions formed in the oxidation process in the anode are transferred through said membrane system (1.2) and react in the cathode, while hydroxyl ions formed in the cathode as a result of chemical equilibrium of water are transported by migration to the anode.

2. The reactor of claim 1, **wherein** said membrane systems (1.2) is composed of a proton-exchange membrane of nafion combined with a generic or anion-exchange membrane.

3. The reactor of any of claims 1 or 2, **wherein** the anode is formed by metal plates (2.1) located in the center of the half-cell, and which come into contact with the surface that contains the membrane systems (1.2) to decrease the distance to the cathode plates.

4. The reactor of any of claims 1 or 2, **wherein** the cathode is composed by a bridge (3.3) located at the bottom of the half-cell, which is connected to the anodic bridge (2.2) by a stainless steel screw through of an L-shaped leg, and where the screw must be outside the fluid system.

5. The reactor of claim 4, **wherein** the cathode plates are divided into two groups: two auxiliary plates (3.2) that are located on the faces of the half-cell and 30 main plates (3.1) that are centered on the body of the half-cell.

6. The reactor according to any of the preceding claims, **which** additionally **comprises** a system of electrical bridges (2.2 and 3.3) designed to form two electrical fields (E1 and E2) perpendicular to each other, the electrical field being horizontally directed between the two half-cells greater than the perpendicular electrical field generated within the anode.

7. The reactor of claim 6, **wherein** the relation between electrical field with horizontal direction between the two half-cells and the perpendicular electrical field generated within the anode is (4:1).

8. The reactor according to any of the preceding claims, **characterized in that** in the cathode there is water and a conductive electrolyte, while in the anode there are homogenized faeces.

9. The reactor of claim 8, **wherein** the conductive electrolyte present in the cathode is phosphoric acid (H₃PO₄).

10. The reactor of claim 9, **wherein** the obtaining of hydrogen occurs as follows:
a) The oxidation of the homogenized faeces generates in the anode hydronium ions, which are attracted by the electrical bridge (2.2) located at the bottom of the anode and in turn are attracted by the bridge (3.3) and the cathodic plates (3.1 and 3.2), causing the transfer of hydronium ions and water molecules through the nafion membrane;
b) Already in the cathode, the hydronium ions are reduced on the cathodic plates (3.1 y 3.2) forming gaseous hydrogen (*H*₂), after which, and by the Le-*Châtelier's* principle, the chemical equilibrium shifts to the right side producing hydroxyl ions and compensating for the loss of hydronium ions; and
c) Part of the hydroxyl ions are transported by migration from the cathode to the anode through the generic membrane that is part of the membrane systems (1.2), facilitating the kinetics of the urea oxidation reaction of faeces in basic medium.
